# EUROPEAN PATENT APPLICATION

(11) **EP 3 988 283 A1**
(43) Date of publication of application: **27.04.2022**
(21) Application number: 21200609.2
(22) Date of filing: 01.10.2021
(51) Int. Cl.: B29C 64/165, B29C 64/188, B33Y 10/00, B33Y 30/00, B33Y 70/00, B22F 10/50, B29C 64/241

(54) **MATERIALS FOR SELECTIVE SINTERING OF COHESIVE FEEDSTOCKS**

(30) Priority: 22.10.2020 US 202017077062
(71) Applicant: Palo Alto Research Center Incorporated, Webster, NY 14580 (US)
(72) Inventor: CHINTAPALLI, Mahati, Mountain View, 94041 (US); PLOCHOWIETZ, Anne, Palo Alto, 94306 (US); PATTEKAR, Ashish, Cupertino, 95014 (US); LU, Jeng Ping, Freemont, 94304 (US); JACKSON, Warren, San Francisco, 94116 (US)
(74) Representative: Gill Jennings & Every LLP

(57) **Abstract**

A method of forming three-dimensional objects includes depositing a sinterable, dense feedstock comprising a sinterable material and binder onto a surface, depositing a sintering selectivity material according to a pattern, removing the binder, sintering the sinterable, dense feedstock to form a three-dimensional sintered object, and finishing the sintered object. A sintering-selectivity material includes a solvent, and a sintering-selectivity material in the solvent, the sintering-selectivity material having the characteristic of being able to penetrate a dense feedstock. A system has a surface, a feedstock deposition head (10) arranged to deposit a sinterable, dense feedstock on the surface, a sintering-selectivity deposition head (20) arranged to deposit a sintering-selectivity material on at least one of the surface and the feedstock, a debinding mechanism arranged to debind the feedstock from the binder, and a sintering chamber to sinter the feedstock after debinding.

## Description

### RELATED CASES

This application is related to co-pending US Patent Application No. 17/094,506 , filed November 10th, 2020.

### TECHNICAL FIELD

This disclosure relates to 3D printing, more particularly to 3D printing of sinterable, cohesive, dense feedstocks.

### BACKGROUND

Certain methods of manufacturing 3D objects involves layer-by-layer printing to build three-dimensional objects. In layer-by-layer printing the feedstock materials, those material used to build the objects typically have support from a build platform, tank, box, or bed. Some applications do not have those elements, requiring a different type of feedstock.

Sinterable feedstocks currently used in 3D printing are typically either loose powder or deposited from a bound filament or feedstock, such as fused deposition modeling (FDM), or extrusion printing. Porous feedstocks or loose powders do not work in unsupported build architectures.

### SUMMARY

According to aspects illustrated here, there is provided a method of forming three-dimensional objects that includes depositing a sinterable, dense feedstock comprising a sinterable material and binder onto a surface, depositing a sintering selectivity material according to a pattern, removing the binder, sintering the sinterable, dense feedstock to form a three-dimensional sintered object, and finishing the sintered object.

According to aspects illustrated here, there is provided sintering-selectivity material that includes a solvent, and a sintering-selectivity material in the solvent, the sintering-selectivity material having the characteristic of being able to penetrate a dense feedstock.

According to aspects illustrated here, there is provided a system having a surface, a feedstock deposition head arranged to deposit a sinterable, dense feedstock on the surface, a sintering-selectivity deposition head arranged to deposit a sintering-selectivity material on at least one of the surface and the feedstock, a debinding mechanism arranged to debind the feedstock from the binder, and a sintering chamber to sinter the feedstock after debinding.

### BRIEF DESCRIPTION OF THE DRAWINGS

Fig. 1 shows an embodiment of a three-dimensional, cylindrical deposition system.
Fig. 2 shows an embodiment of a substrate undergoing deposition in a three-dimensional deposition system.
Fig. 3 shows a flowchart of an embodiment of a process of three-dimensional deposition of sinterable, cohesive feedstocks.
Fig. 4 shows a phase diagram of potential sintering selectivity materials.

### DETAILED DESCRIPTION OF THE EMBODIMENTS

The embodiments use materials and methods to selectively pattern a continuous, cohesive, dense, sinterable feedstock, based on a selective inhibition sintering mechanism (SIS). As used here, a "dense" feedstock is one that has 30% or less porosity. More than likely the material will have porosity of 10% or less, including 10% or less, 5% or less or 1% or less. A "cohesive" feedstock is a feedstock that has a tensile yield stress of 100 kPa or more after being deposited or fixed, 10 kPa or more, 1 kPa or more, 100 Pa or more, or a 50 Pa or more. A "cohesive" feedstock is also one that is not a flowing powder, not a flow powder after being deposited, or not a flowing powder immediately prior to deposition. In general, in the embodiments here, selective patterning for sintering can also occur by mechanisms other than selective inhibition sintering, such as by using positive patterning, using a sintering promoter, or using a material to deactivate a sintering inhibitor. Challenges in using dense, cohesive feedstocks, which this invention overcomes, are in general present in both positive and negative patterning embodiments.

The materials disclosed here are applicable in embedded, high-speed turning for additive layer, EHTAL, or other forms of 3D printing including conventional XY-Z printing. In SIS, a sintering inhibitor is selectively deposited on a build layer at the boundary of the positive space pattern, or in the negative space around the pattern. When the layers are built up and the part is sintered, the inhibited region remains unbound, defining the edge of the part. SIS has been demonstrated with loose powders, but there are inherent challenges using SIS with self-supporting, dense feedstocks that contain binder, and this process has never been demonstrated before with dense feedstocks containing binder.

Components of the sintering inhibitor in SIS and feedstock binder are carefully chosen to ensure that the build cylinder has sufficient strength prior to sintering. The sintering inhibitor may carry the inhibiting agent(s) into the dense feedstock build layer, and the build layer is thin and pinhole-free and can be deposited rapidly. Selecting a binder-inhibitor system where the inhibitor can easily penetrate the build layer is complex and requires innovation. Either the inhibitor has to be capable of simultaneously solvating both ionic and hydrophobic species, or the feedstock needs to be formulated with a strong, hydrophilic binder with appropriate viscoelastic properties for layer deposition. The embodiments here describe materials for these two broad classes and others.

Sinterable feedstocks currently used in three-dimensional printing (3D) typically involve either loose powders or are deposited selectively from a bound filament or feedstock, such as fused deposition modeling (FDM) or extrusion printing. Porous feedstocks or loose powders are not suitable for 3D printing in an unsupported build because they cannot be layered in an unsupported build architecture. FDM-type processes are not suitable for sinterable feedstocks in unsupported processes because with high density ceramic or metal feedstocks the angular momentum of the cylinder would change with build geometry. This would make the rotational control system more complicated and limiting the maximum rotational speed to the FDM-type material deposition processes, which are inherently slow. In addition, FDM processes typically result in parts with relatively low resolution due to the large extrusion head or nozzle opening to enable reasonable material flow rates, and they require a separate support material to generate overhangs.

The embodiments enable the continuous 3D printing of metal and ceramic parts in a cylindrical geometry, by enabling selective sintering of dense, cohesive feedstocks. Previous methods for using additive manufacturing to generate metal or ceramic parts rely on selective laser sintering (SLS) or FDM processes in an XY-Z geometry, and the materials requirements for such processes are different from three dimensional printing on unsupported feedstocks. Mechanisms of selectivity are generally known in the art as shown by patents and applications such as EP1534461B1, US6589471, US9403725, US10232437, US20180304361A1, WO2018173048A1, WO2018173050A1, and KR100659008B1. These do not apply to dense feedstocks. SLS processes for XY-Z 3D printing include positive or negative patterning.

In SLS with positive patterning, a powder layer is selectively compacted, formed into a dense, cohesive un-sintered, green layer, or directly sintered into a dense part. In SLS with negative patterning, a sintering inhibitor is deposited at the boundary or in the negative space of a pattern, or the powder is compacted/bound/solidified at the boundary to form a solid enclosing volume for the loose powder to be sintered. One form of negative-patterned SLS is selective inhibition sintering (SIS). Sintering may take place layer-by-layer, or the part may be separated from the build prior to sintering, and subsequently sintered as a whole. A build refers the both the build process and the materials deposited during a printing process, including the shape to be retained in the final part and the other material. In all of these XY-Z SLS processes, the feedstock is a powder, either pure or a mixture of powdered active materials and powdered binder. XY-Z processes are fundamentally limited in speed compared to 3D printing on unsupported feedstocks because the print development system has to decelerate to reverse direction at the beginning and end of each layer.

For 3D printing on unsupported feedstocks, none of these previous SLS approaches are suitable because of the dense, self-supporting, cohesive feedstock. Selective patterning of sintering on a dense feedstock is more complicated than on a powder because the positive and negative parts of the build are embedded in a single monolith, and it is harder to infiltrate an inhibitor into a dense layer. In addition there are material compatibility challenges discussed with regard to hydrophilic inhibitor combined with hydrophobic binders. The embodiments here overcome all these intrinsic challenges to enable selective patterning of dense, self-supporting feedstocks.

Selective patterning of dense feedstocks can have additional benefits other than enabling cylindrical 3D printing. For example, the patterned monolith can be machined using secondary processes such as die-molding or traditional subtractive manufacturing. The patterning material can carry precursors for additional types of material giving rise to structurally complex, multimaterial and composite parts. These advantages apply both in cylindrical geometry printing and in XY-Z printing.

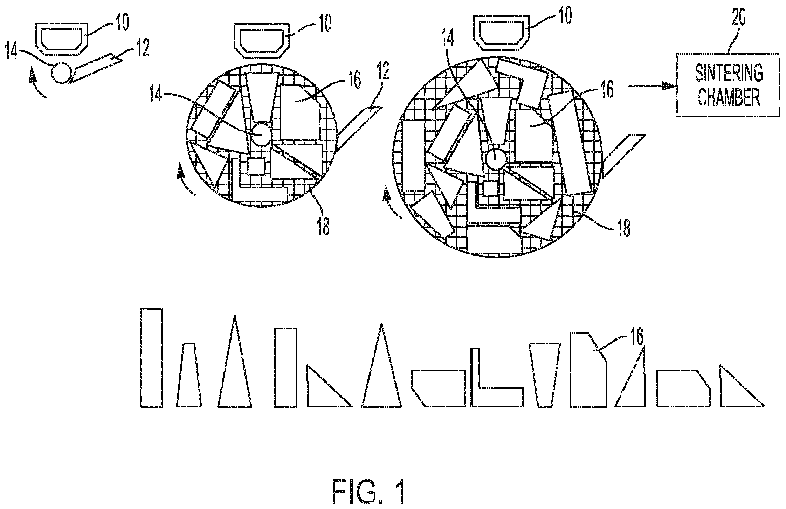

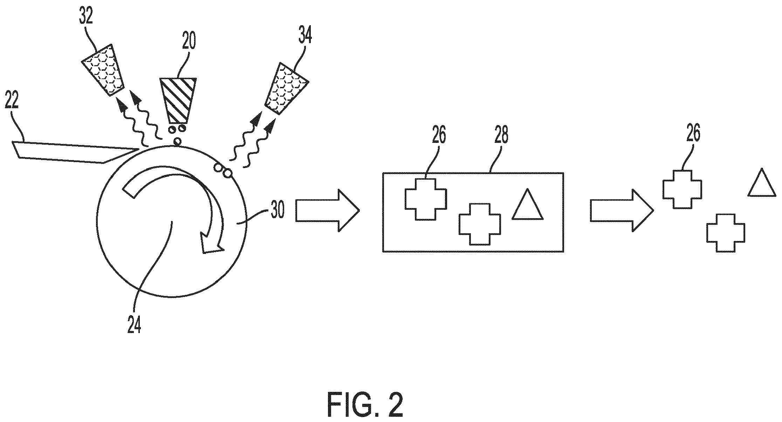

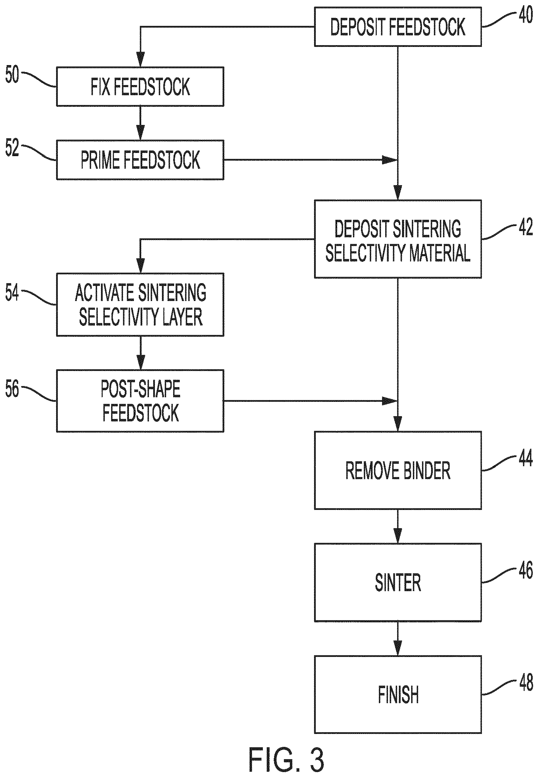

Figs. 1 and 2 show different embodiments of printing on unsupported, cylindrical volumes, with Fig. 3 providing the process description. While one may think of the cylinder as being a "support," because of the rotating nature of the cylinder, the resulting builds are not supported in the same way as a process in which a substrate has materials depositing onto it, where the substrate is supported by a block or other surface.

In Fig. 1, a rotating cylinder has a feedstock applied to it by a deposition head, such as a doctor blade 12. As the cylinder rotates, the most recently applied feedstock layer receives a pattern of sintering selectivity material from the deposition head 10 and may undergo debinding, a process in which the sinterable material is separated from a binder. The binder allows powdered sinterable materials to exist in a dense, cohesive form, which may also be referred to as a paste, melt, emulsion, or slurry, for application to the cylinder 14. The sintering selectivity material marks a boundary, either positively or negatively, to define the part. In some embodiments the sintering selectivity material may be referred to as an ink or fluid.

As the cylinder passes the deposition head, the sintering selectivity material deposition/debinding acts on the current layer of feedstock before the next layer is applied. As the build 18 grows, which consists at least the feedstock of sinterable material and binder plus the sintering selectivity material, the parts such as 16 are defined within it. Upon completion of the build at the far right, the build undergoes sintering and separation, resulting in the individual parts such as 16 shown below.

Fig. 2 shows an alternative embodiment of the system, which may also be the first embodiment with further components. In this embodiment, the deposition of the feedstock occurs with the deposition mechanism 22, such as a doctor blade or other dispenser. The feedstock may undergo a fixing process to convert the feedstock from an easy to apply state, such as liquid, paste or gel, to a semi-solid or solid state. After passing under the fixing station 32, the deposition head 20 deposits the sintering selectivity material on the fixed feedstock. The sintering selectivity material may require activation, so an activator 34 may operate to activate the material. Similar to the system above, the build 28 has the parts such as 26 defined within it, and from which they separate after sintering.

Fig. 3 shows a flowchart of a process of operating the systems of, or similar to, Figs. 1-2, in which the feedstock is deposited a 40. In one embodiment, the feedstock comprises a dense composite phase with porosity below 30 volume %, below 20 volume %, below 10 volume %, below 5 volume %, or below 1 volume %, comprising material to be sintered, and binder. The use of such a feedstock in the processes in the embodiments is novel over prior art. The feedstock can be a liquid, a suspension, a slurry/paste, a solution, an emulsion, all of which will be referred to here as a solution, or a solid.

The dense, cohesive feedstock contains material(s) to be sintered, such as metal, ceramic, carbonaceous materials, and/or polymers, and binder, which can include polymers, solvent, surfactants, plasticizers, and/or adhesives. The material to be sintered can exist as a powder, a soluble or emulsified component in the binder rather than powder, as fibers, platelets, or as other types of particle. The material to be sintered could consist of a range of shapes and sizes of particles, or a range of material types/chemical compositions. Feedstocks suitable for the processes of the embodiments can be found commercially, such as metal injection molding (MIM) feedstocks or feedstocks for tape-casting, slip-casting, or extrusion-based processes.

The feedstock deposition process comprises spreading a thin layer of the dense feedstock onto a surface which can be flat, curved, static, or in motion, heated, cooled, or at room temperature. The surface can be a revolving, outwardly growing cylinder such as an EHTAL system. The feedstock could be melted, subject to shear stress or pressed to facilitate deposition/adhesion onto the surface. The deposition could be accomplished by a variety of methods: spray coating, doctor blading, roller coating, slot-die coating, co-extrusion, dip coating, spin coating, rolling, offset printing, gravure printing, flexographic printing, transfer rolling, or pre-forming the feedstock into supported or free-standing layers and transferring onto the surface. The surface for deposition could be a support that is not integral to the part, or it could be the previous build layer.

In Fig. 3, the main portions of the process are shown in the flow from processes 40 to 42 to 44. The process may include optional processes in the flow from 50, 52, 54, to 56. Each of these processes are optional, either in combination with other optional processes or by themselves.

One such optional process occurs at 50 where the layer undergoes a fixing process. The goal of the fixing process is to transform the feedstock from a state which is easy to apply as layer to a state where the feedstock forms a solid or semi-solid self-supporting structure. The fixing process can facilitate thinner layers to be applied, such as <1 mm, <500 microns, <100 microns, <50 microns, <10 microns, and therefore higher resolution parts. Examples of a fixing process are: drying solvent out of the feedstock to go from a low viscosity liquid to a dry, dense, solid powder-binder composite; UV-curing a feedstock containing a UV-curable liquid binder resin; applying the feedstock as a liquid at or above room temperature followed by cooling to form a solid at room temperature or below.

The layer may undergo another optional process of priming for sintering selectivity material deposition at 52. This makes the feedstock more compatible with the ink. An example of a priming step would be using a laser to ablate/evaporate/transform the binder in areas where sintering selectivity material is to penetrate, or applying an oxygen plasma or ion bombardment to make the binder more hydrophilic, or applying a solvent-based sintering selectivity material formulation to dissolve the binder in areas where sintering selectivity material is to penetrate. The priming step can be patterned while the sintering selectivity material deposition step is not patterned, sintering selectivity material only wets areas where the priming occurred, and the priming step can be unpatterned, while the sintering selectivity material deposition step is patterned, or both could be patterned.

A material to promote selective sintering, referred to here as a sintering selectivity material, such as a fluid, ink, or liquid, is deposited onto the layer at 42. The deposition can be carried out though a pattern-wise process or by coating onto a selectively primed surface. Deposition can occur by spraying, screen printing, digital printing, sintering selectivity material jet printing, offset printing, or other patterned deposition methods. If feedstock fixing is performed in the process, sintering selectivity material deposition can be performed between feedstock deposition and feedstock fixing, after feedstock fixing, or during feedstock fixing.

The sintering selectivity material can carry a sintering inhibitor to be deposited on the negative space or boundary of the pattern, or it can carry a sintering promoter to be deposited in the positive space of the pattern. In an alternative embodiment, the feedstock binder may contain a sintering inhibitor, and the sintering selectivity material could contain an agent to deactivate the inhibitor. The sintering selectivity material may contain a solvent and an active sintering-selectivity material, and optionally, a surfactant, co-solvent(s), and viscosity modifiers to enable printing. Co-solvent and surfactant increase the compatibility of sintering selectivity material with the feedstock binder.

After sintering selectivity material is deposited, the sintering selectivity material may optionally be activated at 54. The purpose of the activation step is to transform the active selective-sintering material in the sintering selectivity material from a state that is easily carried by the sintering selectivity material as a solution or emulsion, to a state that doesn't leach out or diffuse after deposition. The activation could involve applying heat or gas flow to dry the sintering selectivity material and leave a solid residue of the active material. It could involve applying heat, UV, or an energy source to cause a chemical reaction or decomposition reaction to transform a precursor in the sintering selectivity material into a fully-functioning sintering inhibitor, or sintering-selectivity agent. Applying heat may involve applying heat in an inert or reactive gas atmosphere, vacuum, heat between 200-500 °C, and heating to a temperature below a sintering temperature. The two functions of activation, immobilizing the active material, and chemically transforming a precursor can be performed in the same, or in separate activation steps. Activation can be performed during the build process, as indicated in Fig. 3, or it can be performed between completion of the build process and reaching a final sintering temperature. For example, in an early stage of the sintering process, the temperature may be held at a temperature below the final sintering temperature to perform activation.

In yet another optional process the patterned feedstock can undergo post-shaping via molding, cutting, or conventional subtractive manufacturing techniques. Unlike other SLS process where powder feedstocks are used, a build in a rotating cylindrical architecture using the processes disclosed here, results in a monolith that can easily be shaped through conventional manufacturing processes. After patterning, the cylinder in Figs. 1 and 2 could be turned on a conventional lathe, stamped with a die, diced into disks, or any other conventional shaping process.

Removal of the binder from the feedstock at 44 may occur by way of two processes: solvent debind, or thermal debind. In a thermal debind step, the build monolith is heated to remove feedstock binder as liquid or gas, through combustion, vaporization, or decomposition. Thermal debind steps are compatible with a wide range of binders: thermosets, hydrophilic thermoplastics, and hydrophobic thermoplastics. Heating between 100 and 500 °C in air, in inert atmosphere such as N₂ or argon, or in vacuum, or in a reducing, meaning an H₂-containing, atmosphere is typical. Typically the lowest temperature is selected to remove the binder, without causing unwanted chemical changes in the feedstock, such as oxidation if the feedstock is a metal. Thermal debinding may include heating in an inert or reactive gas atmosphere; heating in a vacuum, and heating to a temperature below the sintering temperature.

In a solvent debind, the build is immersed in a solvent, or supercritical CO₂ to dissolve away the binder. The solvents may include acetone, tetrahydrofuran, xylenes, an alkane solvent, dimethylsulfoxide, an organic alcohol, n-methylpyrrolidone, dimethylformamide, sulfolane, trichloroethane, halogenated organic solvents, toluene, water, heptane, or supercritical CO₂. Normally, a solvent debind could result in de-patterning of the selective-sintering agent, as the agent can dissolve and leach out in the debinding solvent. This embodiments overcomes this challenge by incorporating an activation step: for example, the selective-sintering agent can be transformed into an insoluble species prior to debinding. In an activation step, the feedstock and, or sintering selectivity material undergo a chemical or physical change to facilitate sintering selectivity in the process. Solvent de-bind is particularly suited to sintering selectivity material-feedstock systems where the selective-sintering agent has opposite solubility behavior to the feedstock binder, for example an ionic salt selective-sintering agent with a hydrophobic feedstock binder. In such systems, the solvents suitable for debinding will have lower tendency to leach out the selective-sintering agent. In either solvent debinding or thermal debinding, some or all of the binder is removed. Solvent debind and thermal debind can be combined to remove the binder content in stages. Residual binder may be desirable to maintain high green strength in the part (i.e. <3 wt % binder). Green strength is strength of the feedstock or part prior to sintering or prior to de-binding. Properties of the part after de-binding and before sintering may be referred to as "brown".

Sintering is performed according to the requirements of the feedstock at 46. For metal feedstocks, sintering is often performed in a reducing environment such as forming gas, 2-4 % H₂ in argon, or pure H₂. Sintering process parameters are selected to provide optimal sintering of the feedstock and optimal inhibition for the selective-sintering agent. For metal feedstocks, selective sintering inhibitors are typically precursors to refractory ceramics that sinter at much higher temperatures than the metal precursors. For commercial feedstocks, the optimal debinding and sintering process is typically known in the art. The embodiments here describe selection of materials and processes for introducing selectivity into the established debinding and sintering protocols.

Finishing after sintering at 48 involves separating sintered and unsintered regions, and may include producing surface-finish, and machining areas that require high tolerance. Separating may require a significant amount of force, such as hammering, cracking, freeze-fracturing, sandblasting, or chiseling. Surface finishing and machining is known in the art. The process described herein typically results in a near net-shape part, and precision dimensions are achieved through finishing steps.

In one embodiment, the selective patterning agent acts on the cohesion or debinding activity of the binder in the feedstock rather than the sintering of the active material in the feedstock. This enables separation of parts before sintering, making the finishing step less complicated. An example of such a system would be a negative-patterned sintering selectivity material that introduces a plasticizer into a feedstock with thermoplastic binder, lowering its melting temperature to T_{m,new}. During printing at room temperature, the entire build monolith is solid. To separate parts after the build is complete, the build monolith is raised to a temperature above T_{m,new} and below the original feedstock melting point, Tₘ. The parts are separated and then advanced to further process steps (de-binding, sintering, etc.).

Another example of such a system would be printing a positive-patterned sintering selectivity material containing a radical initiator onto a feedstock with a thermoplastic, crosslinkable binder. The feedstock has a melting point of Tₘ, and the initiator has a decomposition temperature, Tᵢ below Tₘ. The uncrosslinked and crosslinked feedstock can be thermally decomposed into volatile components at a temperature, T_{d}, above Tₘ and Tᵢ. The build monolith is heated above Tᵢ and below Tₘ to cause selective crosslinking. The crosslinked regions no longer become liquid when heated to Tₘ, and can no longer be leached out in a solvent. The remaining material is either thermally debound at a temperature above Tₘ and below T_{d}, or solvent-debound. Parts are separated, then the crosslinked binder is thermally debound at a temperature above T_{d}, followed by sintering.

The build steps illustrated in Figure 3 can be performed sequentially, such as in an XY-Z build configuration, or in parallel, such as in a rotating, cylindrical build configuration. In the rotating, cylindrical instance, build steps are spatially separated rather than temporally separated. The build steps are repeated to produce additional layers. After all of the layers are produced, the post-processing is performed.

The discussion now turns to examples of materials usable in the process. Some examples of materials that can be sintered are: stainless steel alloys such as 17-4PH, carbonyl iron, 316, magnetic alloys, copper-nickel alloys, titanium, copper, alumina, zirconia, aluminosilicate minerals and glasses, polymer particles, and many others including various metals, metal alloys, ceramics, and plastics / polymers.

Binder for the feedstock may be hydrophobic or hydrophilic, and it may contain thermoplastic or thermoset components. Some active binder materials include: polyethylene, polypropylene, polyoxymethylene, paraffin, carnuba wax, polypropylene oxide, polybutylene oxide (hydrophobic thermoplastics); polyethylene oxide, polypropylene carbonate, polybutylene carbonate, alginate, agar, cellulose, methylcellulose, methylcellulose-based compounds, sodium lignosulfonate, polyvinyl alcohol, polyvinyl butyral, polyacrylate salts, polylactic acid, (hydrophilic thermoplastics), and hydrophobic or hydrophilic UV-curable acrylate and methacrylate resins (thermosets).

Binders can contain additional components such as surfactants to promote adhesion with the sinterable components, these may include stearic acid, oleic acid, oleyl amine, fish oil, Pluronic surfactants, block copolymers of polyethylene oxide and polypropylene oxide, sodium dodecyl sulfate, molecules containing a hydrophobic moiety and a hydrophilic moiety. These molecules may include phosphate, sulfate, ammonium, carboxylates, or other amphiphilic molecules. Binder can contain viscosity modifiers such as oligomers, meaning short chain polymers, typically below 5 kg/mol or below 1 kg/mol, of the polymers listed above, glycerin, phthalate-containing molecules, dibutyl phthalate, dioctyl phthalate or solvents such as water, or organic solvents, such as toluene, xylenes, alkanes, decane, hexane, isoparrafinic materials, n-methylpyrrolidone, dimethylformamide, tetrahydrofuran, dimethylsulfoxide, acetophenone, and others.

The choice of sintering selectivity material components depends on the active material to be sintered, and whether the sintering selectivity material is to be negative-patterned or positive-patterned. For negative patterning of metal feedstocks, the active sintering selectivity material is a material that sinters at a higher temperature than the metal, often a refractory ceramic, a precursor to a refractory ceramic, or an oxidizing agent that selectively transforms the metal into a refractory ceramic. The inhibiting material either forms a layer on or adjacent to the sinterable particles in the pattern, separate particles. Examples of materials that sinter at temperatures above most engineering metals such as bronze, brass, aluminum alloys, and steel, are: aluminosilicate minerals, alumina, zirconia, iron oxide, chromite, ceria, yttria, silicon carbide, calcium oxide-containing ceramics, magnesium oxide-containing ceramics, materials or ceramics containing an element, where those elements include calcium (Ca), magnesium (Mg), barium (Ba), strontium (Sr), titanium (Ti), aluminum (Al), zirconium (Zr), yttrium (Y), iron (Fe), cerium (Ce), vanadium (V), tungsten (W), lanthanum (La), hafnium (Hf), tantalum (Ta), niobium (Nb), and chromium (Cr), or mixtures/solid solutions of these. Sintering temperatures for engineering metals include temperatures >500 °C, >600 °C, > 900 °C, >1100 °C, and >1400 °C.

Active materials could be nanoparticles or microparticles of these materials suspended in ink, or chemical precursors to the ceramics such as salts that decompose and form a metal oxide when exposed to process steps such as thermal debind, early sintering, or reaction with a solution in a solvent-debind step. Suitable salts include aluminum nitrate, aluminum bromide, aluminum chloride, aluminum hydroxide, aluminum iodide, aluminum phosphate, aluminum lactate, aluminum sulfate, aluminum monostearate, zirconium nitrate, zirconium carbonate, ammonium zirconate, zirconyl chloride, zirconyl nitrate, yttrium carbonate, yttrium chloride, yttrium nitrate, iron acetyl aetonate, ferrocene, iron citrate, iron chloride, iron bromide, iron oxalate, iron phosphate, iron sulfate, iron nitrate, cerium bromide, cerium chloride, cerium hydroxide, cerium nitrate, cerium oxalate, cerium sulfate, ceric ammonium nitrate, vanadium chloride, vanadium chloride tetrahydrofuran, vanadium oxychloride, salts of the elements calcium (Ca), magnesium (Mg), barium (Ba), strontium (Sr), titanium (Ti), aluminum (Al), zirconium (Zr), yttrium (Y), iron (Fe), cerium (Ce), vanadium (V), tungsten (W), lanthanum (La), hafnium (Hf), tantalum (Ta), niobium (Nb), and chromium (Cr) and others.

The non-metal ion in the metal-salt can be selected to be an oxidizing agent such as sulfate, ammonium nitrate, chlorate, chlorite, hypochlorite, perchlorate, permanganate, persulfate, or nitrate, to enhance the sintering inhibition. Some metal ions also enhance oxidizing behavior, such as cerium ions. These oxidizing ions could also be part of a compound that does not contain a metal ion, such that the sintering selectivity material acts solely to oxidize the sintering metals in the inhibition pattern.

In positive patterned metals, the active component of the material is a reducing agent or flux to facilitate sintering. The reducing agent could be particles of graphite, graphene, carbon nanotubes, fullerenes, other forms of carbon with sp2 bonding, sodium borohydride, reducing sugars, glucose, compounds containing tin(II), compounds containing iron (II), oxalic acid, formic acid, ascorbic acid, acetol, alphahydroxy ketones, phosphorous acid, phosphites, hypophosphites, borax, ammonium chloride, hydrochloric acid, and others.

The active sintering selectivity material for negative patterned ceramics can use a similar strategy for the active selective sintering agent as negatively patterned metals, by introducing a material with a higher sintering temperature than the ceramic to be sintered, either directly through particles, or indirectly through chemical precursors. The oxidative strategy for sintering inhibition is not generally used. The active sintering selectivity material for positive patterned ceramics varies widely based on the type of ceramic. Addition of ceramic fluxes or precursors to ceramic fluxes is one strategy. Ceramic fluxes are typically oxides of or compounds containing lead, sodium, potassium, lithium, calcium, magnesium, barium, zinc, strontium, and manganese, feldspars, boron, and glass frit particles with low glass transition.

For polymeric feedstocks, the polymer to be sintered would be embedded in a binder that has a lower processing temperature, such as the glass transition or melting point. Sintering selectivity material could be a lubricant, surfactant that prevents bonding, negative selectivity, or a plasticizer/solvent selective for the feedstock polymer, chemical linker or selective adhesive to promote adhesion between particles. Polymer sintering is generally applicable to thermoplastic materials. Examples of polymers suitable for sintering are fluorinated ethylene propylene, polytetrafluoroethylene, polyetheretherketone, polyamides, polyacrylonitrile butadiene styrene, polylactic acid, or other polymers used in SLS or FDM processes.

Other components of the sintering selectivity material depend on the deposition process. Other components can be solvents to suspend or dissolve other components, viscosity modifiers, surfactants, and stabilizers. Examples of solvents are: water, organic solvents, volatile solvents, or high boiling point solvents, polar, or non-polar solvents, toluene, xylenes, alkanes, decane, hexane, isopar, n-methylpyrrolidone, dimethylformamide, tetrahydrofuran, dimethylsulfoxide, acetophenone, and others.

Viscosity modifiers and surfactants can be the same as chemicals used in the feedstock as binders, surfactants, and viscosity modifier components of the feedstock. Some of these are: glycerin, polymers or oligomers that are soluble in the solvent, small quantities of materials used as binders in the feedstocks, stearic acid, sodium dodecyl sulfate, and others discussed in more detail above. For example, to pattern sintering selectivity material using a piezo-driven inkjet print head, material viscosity in the range of 10-14 cP is desired. If the ink contains components that can undergo slow degradation, stabilizers can be used to extend shelf life. Some stabilizers are antioxidants, UV absorbers, butylated hydroxytoluene, 4-methoxyphenol, and others.

The below table shows a list of single solvents and the results of whether 50 mg salt plus 1 milliliter solvent dissolves. Simple solvents do not simultaneously dissolve feedstock and a sintering inhibitor used as the sintering-selectivity material, in this case Al(NO₃)₃. Polar solvents such as NMP and DMF (dimethylformamide) dissolve the inhibiting salts. Non-polar solvents dissolve the feedstock. For the sintering selectivity material to penetrate the feedstock layer, the sintering selectivity material has to dissolve both.

Simple solvents do not simultaneously dissolve feedstock and a sintering inhibitor, such as Al(NO₃)₃. Polar solvents such as NMP and DMF dissolve the inhibiting salts. Non-polar solvents dissolve the feedstock. For sintering selectivity material to penetrate a feedstock layer, the sintering selectivity material has to dissolve both. Table 1 shows examples of simple solvents, and Table 2 shows examples of co-solvents.

**Table 1**

| Solvent | Al (NO₃)₃ | Al₂(SO₄)₃ | Al monostearate | Feedstock (room temp) | Feedstock (80° C) |
|---|---|---|---|---|---|
| NMP | Yes | Yes | No | No | Yes |
| DMF | Yes | Yes | No | No | Yes |
| PC | No | No | No | No | - |
| Isopar | No | No | No | Yes | Yes |
| Decane | No | No | No | Yes | Yes |
| Xylenes | No | No | No | Yes | Yes |

**Table 2**

| Solvent (50/50 v/v) | Al (NO₃)₃ | Al₂(SO₄)₃ | Al monostearate | Feedstock |
|---|---|---|---|---|
| NMP/Xylenes | 2 liquid phases | No | No | Yes |
| NMP/Toluene | No | No | No | Partial |
| NMP/PC | Yes | Partial | - | No |
| DMF/Toluene | No | No | No | Partial |
| DMSO/Toluene | No | No | No | Partial |

A "Partial" result means that the solution is hazy at room temperature. NMP is n-methylpyrrolidone, DMSO is dimethysulfoxide, and PC is propylene carbonate. NMP and xylenes as co-solvents can dissolve both a salt and the feedstock, but the form a phase-separated 2-liquid system.

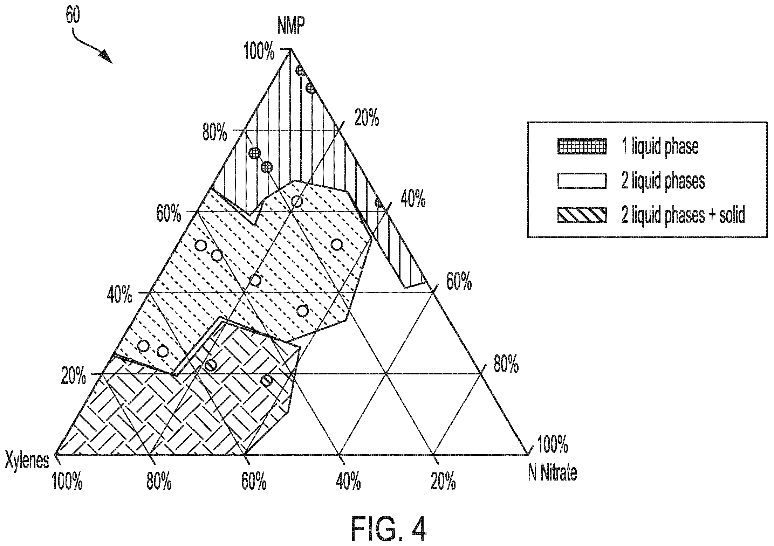

Fig. 4 shows a pyramid of ink formulations 60 containing 2 co-solvents, NMP, and xylenes, and a precursor to a sintering inhibitor such as Al(NO₃)₃. NMP is a polar solvent that dissolves Al(NO₃)₃, and xylenes is a nonpolar solvent that helps wetting between the salt-carrying sintering selectivity material and the hydrophobic feedstock. There is a region in the formulation space where the sintering selectivity material can dissolve both feedstock and salt, and forms a single liquid phase.

Table 3 shows contact angle measurements for different sintering selectivity material formulations and substrates showing significant change in wettability of sintering selectivity material formulation on MIM feedstock sheet versus thermally and solvent debound MIM feedstock sheets.

| Contact Angle Measurements | 50 µg/mL | 50 µg/mL | 50 µg/mL | 150 µg/mL | saturated |
|---|---|---|---|---|---|
| Substrate \| Ink formulation | NMP-AS | NMP/xylen es ― AN | NMP-AN | NMP-AN | NMP-AN |
| 17-4PH MIM sheet | 82.0 ± 1.0° | 95.5 ± 0.9° | 55.3 ± 0.5° | 106.2± 0.4° | 108.3± 3.1° |
| 17-4PH MIM sheet, thermally debound | < 5° | < 5° | < 5° | < 5° | 23.4 ± 1.3° |
| 316L MIM sheet | 81.4 ± 1.4° | | 90.5 ± 0.5° | | |
| 316L MIM sheet, thermally debound | < 5° | | < 5° | | |
| Polyester | 37.9 ± 2.8° | | 35.9 ± 1.2° | | |
| Polyethylene | 31.9 ± 0.5° | | 39.6 ± 0.2° | | |
| Polypropylene | 43.0 ± 0.5° | 37.7 ± 1.7° | 46.3 ± 0.7° | | |
| Polystyrene | 21.1 ± 0.5° | | 13.7 ± 0.6° | | |
| Polyvinylcarbonate | 34.1 ± 0.5° | | 17.6 ± 0.8° | | |
| Polycarbonate | 43.1 ± 0.2° | | 47.8 ± 0.1° | | |
| 17-4PH MIM sheet, solvent debound (decane) | 54.0 ± 1.9° | 47.3 ± 0.7° | 23.2 ± 2.9° | 95.8 ± 1.3° | 115 ± 0.7° |
| 17-4PH MIM sheet, solvent debound (heptane) | 81.3 ± 0.4° | 65.0 ± 0.6° | 84.4 ± 1.7° | 81.3 ± 0.2° | 113.3 ± 2.4° |

Other modifications and variations may exist. For example, the embodiments could employ traditional manufacturing of metal and ceramics, such as be subtractive or molding plus sintering. Other 3D printing techniques may be employed such as SLS and FDM. FDM and SLS could operate on the rotational, cylindrical processes. In the case of SLS, the negative space could be filled with a sacrificial material. Some options could spread or compact a powder onto a cylinder, though it may be porous and less strong than a dense cylinder. The deposition of sintering selectivity material may involve depositing a sintering promoter rather than a sintering inhibitor. The sintering may occur with selective laser sintering, or laser sintering after FDM. The rotational, cylindrical process may increase the production speed. Other mechanisms could be used to deposit and/or activate sintering inhibitor, or inhibit sintering. Selective sintering of loose powder feedstocks, or sintering layer-by-layer may also be used. These strategies could also be used in XY-Z geometry to produce a dense, cohesive build, for applications where it might be useful to do so.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A method of forming three-dimensional objects, comprising:
depositing a sinterable, dense feedstock comprising a sinterable material and binder onto a surface;
depositing a sintering selectivity material according to a pattern;
removing the binder;
sintering the sinterable, dense feedstock to form a three-dimensional sintered object; and
finishing the sintered object.

2. The method as claimed in claim 1, wherein the sinterable, dense feedstock is also cohesive.

3. The method as claimed in claim 1 or claim 2 wherein depositing the sinterable feedstock having a binder comprises depositing the sinterable feedstock having a binder as a liquid, a suspension, a slurry, a solution, an emulsion, or a solid, and/or wherein the sinterable material comprises at least one of metal, ceramic, carbonaceous materials, and polymers, and/or wherein the binder comprises at least one of polymers, solvent, surfactants, plasticizers, and adhesives, and/or wherein the feedstock comprises feedstock used in at least one of metal injection molding, tape-casting, slip-casting, and extrusion-based processes, and/or wherein the surface comprises at least one of flat, curved, static, moving, heated, cooled, and at room temperature, and/or wherein depositing a sinterable feedstock comprises one of spray coating, doctor blading, roller coating, slot-die coating, co-extrusion, dip coating, spin coating, rolling, offset printing, gravure printing, flexographic printing, transfer rolling, or transferring one of supported or free-standing layers onto the surface, and/or wherein depositing the sintering-selectivity material comprises one of a pattern-wise process, spraying, screen printing, digital printing, inkjet printing, offset printing, and/or wherein depositing the sintering-selectivity material comprises depositing at least one of a sintering inhibitor, a sintering promoter, a deactivation agent to deactivate a sintering inhibitor in the feedstock, a precursor to a sintering inhibitor, or a precursor to a sintering promoter.

4. The method as claimed in any of the preceding claims, further comprising fixing the feedstock after depositing the feedstock, preferably wherein depositing the sintering-selectivity material occurs one of after depositing the feedstock and before fixing the feedstock, after fixing the feedstock, or during fixing the feedstock, and preferably wherein fixing the feedstock comprises at least one of drying solvent out of the feedstock, UV-curing, and cooling the feedstock.

5. The method as claimed in any of the preceding claims, further comprising priming the feedstock after depositing the feedstock and depositing the sinter-selectivity material, wherein priming the feedstock preferably comprises at least one of applying a laser to areas where sintering selectivity material is to penetrate, applying an oxygen plasma, bombarding the feedstock with ions, and applying a solvent.

6. The method as claimed in any of the preceding claims, further comprising activating the sintering-selectivity material, wherein activating the sintering-selectivity material preferably comprises one of application of at least one of heat, UV light, or an energy source, to cause one of either drying the sintering selectivity material, precipitating a component of the sintering selectivity material, a chemical reaction, or a decomposition reaction.

7. The method as claimed in any of the preceding claims, further comprising post-shaping prior to removing the binder, or prior to sintering the feedstock, wherein post-shaping preferably comprises at least one of molding, cutting, subtractive manufacturing, turning, stamping, and dicing.

8. The method as claimed in any of the preceding claims, wherein removing the binder comprises one selected from the group consisting of: thermal debinding by heating; removing the binder by one of combustion, vaporization, or decomposition; heating in an inert or reactive gas atmosphere; heating in a vacuum, heating to a temperature below the sintering temperature; and solvent debinding immersing the build in one of a solvent, acetone, tetrahydrofuran, xylenes, an alkane solvent, dimethylsulfoxide, an organic alcohol, n-methylpyrrolidone, dimethylformamide, sulfolane, trichloroethane, halogenated organic solvents, toluene, water, heptane, or supercritical CO₂, and/or wherein finishing the build comprises at least one of separating sintered and unsintered regions, producing surface-finish, shaping to achieve a precise tolerance, and machining.

9. A sintering-selectivity material, comprising:
a solvent; and
a sintering-selectivity material in the solvent, the sintering-selectivity material having the characteristic of being able to penetrate a dense feedstock.

10. The material as claimed in claim 9, wherein the sintering-selectivity material comprises one of: sintering inhibitor, a sintering promoter, and a deactivating agent to deactivate a sintering inhibitor in a feedstock, and.or at least one of a viscosity modifier and a surfactant, preferably wherein at least one of the viscosity modifier and the surfactant comprises one selected from the group consisting of: glycerin, polymers soluble in the solvent, gelators, oligomers soluble in the solvent, materials used as binders in the feedstocks, stearic acid, and sodium dodecyl sulfate, and wherein the sintering-selectivity material preferably further comprises a co-solvent.

11. The material as claimed in claim 9 or claim 10, wherein the material is activatable, and wherein activating the sintering-selectivity material preferably comprises one of application of at least one of heat, heat in an inert or reactive gas atmosphere, vacuum, heat between 200-500 °C, heating to a temperature below a sintering temperature, UV light, or an energy source, to cause one of either drying the sintering selectivity material, precipitating a component of the sintering selectivity material, a chemical reaction, or a decomposition reaction.

12. The material as claimed in any of claims 9 to 11, wherein the sintering-selectivity material is a material that sinters at a temperature higher than a sintering temperature, wherein the sintering-selectivity material is preferably one of a refractory ceramic, a precursor to a refractory ceramic, an oxidizing agent capable of transforming the material to be sintered into a material with a higher sintering temperature, a material with a sintering temperature greater than 1500 C, a material that transforms into a material with a sintering temperature greater than 1500 C, and a material that decomposes and forms a metal oxide with a sintering temperature higher than the material to be sintered, and/or wherein the sintering-selectivity material is comprised of one of the group consisting of: aluminosilicate minerals; alumina; zirconia; iron oxide; chromite; ceria; yttria; silicon carbide; calcium oxide-containing ceramics; magnesium oxide-containing ceramics; ceramics containing at least one of the elements calcium, magnesium, barium, strontium, titanium, aluminum, zirconium, yttrium, iron, cerium, vanadium, tungsten, lanthanum, hafnium, tantalum, niobium, and chromium; and mixtures thereof, and wherein the material that decomposes preferably comprises a salt comprising one of the group consisting of: aluminum nitrate; aluminum bromide; aluminum chloride; aluminum hydroxide; aluminum iodide; aluminum phosphate; aluminum lactate; aluminum sulfate; aluminum monostearate; zirconium nitrate; zirconium carbonate; ammonium zirconate; zirconyl chloride; zirconyl nitrate; yttrium carbonate; yttrium chloride; yttrium nitrate; iron acetyl aetonate; ferrocene; iron citrate; iron chloride; iron bromide; iron oxalate; iron phosphate; iron sulfate; iron nitrate; cerium bromide; cerium chloride; cerium hydroxide; cerium nitrate; cerium oxalate; cerium sulfate; salts containing the elements include calcium, magnesium, barium, strontium, titanium, aluminum, zirconium, yttrium, iron, cerium, vanadium, tungsten, lanthanum, hafnium, tantalum, niobium, and chromium and ceric ammonium nitrate, and/or wherein the material that decomposes preferably comprises an oxidizing agent selected from the group consisting of: sulfate, ammonium nitrate, chlorate, chlorite, hypochlorite, perchlorate, permanganate, persulfate, cerium, and nitrate.

13. The material as claimed in any of claims 9 to 12, wherein the sintering-selectivity material is a material that sinters at a temperature higher than a sintering temperature of a ceramic used in a feedstock, wherein the sintering-selectivity material preferably comprises a material selected to facilitate sintering, wherein the material to facilitate sintering preferably comprises one of the group consisting of: particles of graphite, graphene, carbon nanotubes, fullerenes, forms of carbon with sp2 bonding, sodium borohydride, reducing sugars, glucose, compounds containing tin (II), compounds containing iron (II), oxalic acid, formic acid, ascorbic acid, acetol, alphahydroxy ketones, phosphorous acid, phosphites, hypophosphites, borax, ammonium chloride, and hydrochloric acid, and/or wherein the material to facilitate sintering comprises one of a ceramic flux or a precursor to a ceramic flux, preferably wherein the ceramic flux comprises an oxide of, or compounds containing, one of the group consisting of: lead, sodium, potassium, lithium, calcium, magnesium, barium, zinc, strontium, and manganese, feldspars, boron, and glass frit particles with low glass transition.

14. The material as claimed in any of claims 9 to 13, wherein a feedstock comprises a polymer to be sintered embedded in a binder, and the sintering-selectivity material comprises one of the group consisting of: a lubricant; a surfactant that prevents bonding; a plasticizer/solvent selective for the feedstock polymer; a chemical linker and a selective adhesive to promote adhesion between particles, and/or wherein the solvent comprises one of the group consisting of: water, organic solvents, volatile solvents, high boiling point solvents, polar solvents, non-polar solvents, toluene, xylenes, alkanes, decane, hexane, isopar, n-methylpyrrolidone, dimethylformamide, tetrahydrofuran, dimethylsulfoxide, and acetophenone.

15. A system, comprising:
a surface;
a feedstock deposition head arranged to deposit a sinterable, dense feedstock on the surface;
a sintering-selectivity deposition head arranged to deposit a sintering-selectivity material on at least one of the surface and the feedstock;
a debinding mechanism arranged to debind the feedstock from the binder; and
a sintering chamber to sinter the feedstock after debinding.
